# EUROPÄISCHE PATENTSCHRIFT

(11) **EP 2 219 933 B1**
(45) Veröffentlichungstag und Bekanntmachung des Hinweises auf die Patenterteilung: **31.10.2018**
(21) Anmeldenummer: 08856864.7
(22) Anmeldetag: 22.11.2008
(51) Int. Cl.: B62D 15/02, B60W 30/12, B60W 50/08

(54) **VERFAHREN UND VORRICHTUNG ZUM AKTIVEN HALTEN EINER FAHRSPUR**
METHOD AND DEVICE FOR ACTIVELY MAINTAINING A DRIVING LANE
PROCÉDÉ ET DISPOSITIF POUR LE MAINTIEN ACTIF D'UNE TRAJECTOIRE

(30) Priorität: 03.12.2007 DE 102007058078
(43) Veröffentlichungstag der Anmeldung: 25.08.2010
(73) Patentinhaber: Volkswagen Aktiengesellschaft, 38440 Wolfsburg (DE); Audi AG, 85045 Ingolstadt (DE)
(72) Erfinder: ROHLFS, Michael, 38531 Rötgesbüttel (DE); BROSIG, Stefan, 29386 Hankensbüttel (DE); BUSCHARDT, Boris, 85049 Ingolstadt (DE); SCHMIDT, Gerrit, 38106 Braunschweig (DE)
(86) Internationale Anmeldenummer: PCT/EP2008/009908
(87) Internationale Veröffentlichungsnummer: WO 2009/071210

(56) Entgegenhaltungen:
- EP-A- 0 806 336
- DE-A1-102004 019 505
- DE-A1-102005 004 727
- DE-A1-102005 050 662
- DE-A1-102006 004 772
- DE-A1-102006 022 391

## Beschreibung

Die Erfindung betrifft ein Verfahren und eine Vorrichtung zum aktiven Halten einer Fahrspur eines Kraftfahrzeuges.

Es sind Fahrerassistenzsysteme bekannt, bei denen ein Kraftfahrzeugführer über ein unbeabsichtigtes Verlassen der Fahrspur informiert wird, wobei darüber hinaus vorgeschlagen wurde, ein zusätzliches Lenkmoment aufzubringen, um dem Verlassen der Fahrspur entgegenzuwirken.

Des Weiteren sind verschiedene Fahrerassistenzsysteme bekannt, wo durch aktive Lenkeingriffe die Fahrstabilität erhöht werden soll.

Ein entscheidendes Kriterium für alle derartigen Assistenzsysteme ist, dass der Kraftfahrzeugführer die Situation beherrschen kann, also nicht durch die Zusatzlenkmomente zu falschen Reaktionen verleitet wird.

Aus der DE 10 2006 004 772 A1 ist ein Verfahren zum aktiven Halten einer Fahrspur eines Kraftfahrzeugs bekannt, mittels mindestens einer Einrichtung zur Erfassung einer Fahrspur, einer Auswerteeinheit zur Berechnung eines Zusatzlenkmoments, um einem unerwünschten Verlassen der Fahrspur entgegenzuwirken, und einer Stelleinrichtung zur Generierung des Zusatzlenkmoments, wobei die generierten Zusatzlenkmomente von Betrag und Gradienten begrenzt werden. Ähnliche Verfahren sind aus der EP 0 806 336 A sowie der DE 10 2006 022 391 A1 bekannt.

Aus der DE 10 2005 050 662 A1 ist ein Spurhalteassistent mit aktiven Lenkeingriffen bekannt.

Die DE 10 2005 004 727 A1 offenbart ein Verfahren zur Spurhalteunterstützung mit aktivem Lenkeingriff, wobei das Zusatzlenkmoment betragsmäßig begrenzt wird.

Die DE 10 2004 019 505 A1 ist eine Spurverlassungswarneinrichtung bekannt, wobei in einer ersten Stufe eine haptische und in einer zweiten Stufe eine akustische Warnung erfolgt.

Der Erfindung liegt das technische Problem zugrunde, ein Verfahren und eine Vorrichtung zum aktiven Halten einer Fahrspur zu schaffen, die an das Reaktionsverhalten eines Kraftfahrzeugführers angepasst ist.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Hierzu umfasst die Vorrichtung zum aktiven Halten einer Fahrspur eines Kraftfahrzeuges mindestens eine Einrichtung zur Erfassung einer Fahrspur, eine Auswerteeinheit zur Berechnung eines Zusatzlenkmomentes, um einem unerwünschten Verlassen der Fahrspur entgegenzuwirken, und eine Stelleinrichtung zur Generierung des Zusatzlenkmomentes, wobei die generierten Zusatzlenkmomente vom Betrag und Gradienten begrenzt sind. Dabei wird ausgenutzt, dass die Gradientenbegrenzung dazu führt, dass im Fehlerfall das Fahrzeug für den Fahrer sehr einfach beherrschbar bleibt. Im Wesentlichen reagiert dabei der Fahrer auf schnelle Anstiege der Lenkmomente. Werden diese Anstiege begrenzt, kann der Fahrer trotz hoher eingestellter Lenkmomente das Fahrzeug noch jederzeit beherrschen. Sprunghafte, nicht kontinuierliche Lenkmomentänderungen werden durch die Begrenzung vermieden. Des Weiteren werden die Zusatzlenkmomente betragsmäßig begrenzt, wobei dieser Betrag jedoch vorzugsweise höher gewählt wird als bei vergleichbaren Assistenzsystemen, wie beispielsweise DSR (Driver Steering Recommendation), dass in Extremsituationen eine Spurhaltung gewährleisten soll.

Dabei ist die Dauer des Zusatzlenkmomentes zeitlich begrenzt, um einen kontinuierlichen aktiven Lenkeingriff zu vermeiden. Weiter wird zwischen zwei Zusatzlenkmomentphasen eine Pause eingefügt. Die Dauer des Zusatzlenkmomentes ist beispielsweise auf 30 Sekunden beschränkt, wobei die Pause 250 ms lang ist. Gab es also innerhalb von 30 Sekunden keine Zusatzlenkmomentunterbrechung, so wird das Zusatzlenkmoment auf Null heruntergefahren, wobei die Gradientenbegrenzung eingehalten wird. Anschließend wird für die Pause keine Zusatzlenkmomentanforderung umgesetzt.

In einer bevorzugten Ausführungsform wird sowohl der Gradient beim Anstieg als auch beim Abfall begrenzt, wobei die Ursache für die Beendigung des Zusatzlenkmomentes vorzugsweise keine Rolle spielt. So kann die Zusatzlenkmomentphase beispielsweise beendet werden, wenn kein Verlassen der Fahrspur droht oder aber bei einem Timeout der zugehörigen CAN-Botschaft bzw. der Botschaft eines anderen Bussystems. Die Begrenzung des Gradienten des Zusatzlenkmomentes erfolgt vorzugsweise mittels einer Rampenfunktion, d.h. es existiert ein fester maximaler Gradient, der nicht überschritten werden kann. Änderungen des Zusatzlenkmomentes mit einem kleineren Gradienten als die begrenzende Rampenfunktion sind zulässig und werden durchgeführt. Ist beispielsweise der maximale Gradient 3 Nm/s und ist ein Zusatzlenkmoment angefordert, dessen Verlauf eine Steigung von 2 Nm/s hat, so wird das Zusatzlenkmoment mit dem geringeren Gradienten angehoben. Sprunghafte Änderungen des Zusatzlenkmomentes werden hingegen durch die Rampenfunktion begrenzt.

Vorzugsweise ist der begrenzende Gradient beim Anstieg und Abfall des Zusatzlenkmomentes betragsmäßig gleich groß.

In einer weiteren bevorzugten Ausführungsform sind der maximale Betrag und/oder der Gradient und/oder die Dauer des Zusatzlenkmomentes und/oder die Pause zwischen zwei Zusatzlenkmomentphasen veränderbar einstellbar, so dass die Spurhalteassistenzfunktion an den Fahrer und/oder das Kraftfahrzeug optimal anpassbar ist.

In einer weiteren bevorzugten Ausführungsform ist zusätzlich eine Lenkradvibration als haptische Warnung für das Verlassen der Fahrspur erzeugbar, die gleichzeitig als Übernahmeaufforderung für den Fahrer wirkt, das Zusatzlenkmoment aufzunehmen. Die Amplitude und Frequenz der Lenkradvibration wird dabei vorzugsweise als CAN-Botschaft bzw. Botschaft ei Lenkradvibration wird vorzugsweise noch korrigiert, um ein kennlinien- und geschwindigkeitsabhängiges Vibrationsverhalten zu garantieren. Des Weiteren wird vorzugsweise die Amplitude und das Moment der Vibration begrenzt, wobei nur Frequenz/Amplituden-Kombinationen umgesetzt werden dürfen, die zu keinem kritischen Verhalten der Lenkung führen. Der Frequenzbereich der Vibration, gemessen am Lenkrad, liegt vorzugsweise zwischen 15 bis 45 Hz, wobei eine Auflösung von mindestens 2 Hz bevorzugt wird. Der Amplitudenbereich der Vibration, gemessen als Moment am Lenkrad, liegt vorzugsweise zwischen 1,5 Nm bis 3 Nm, wobei die Auflösung um 0,1 Nm liegen sollte. Somit kann situativ angepasst eine geeignete Frequenz und eine geeignete Amplitude eingestellt werden. Dabei sei angemerkt, dass Lenkrad allgemein als geeignetes Lenkwinkeleingabemittel zu verstehen ist. Die Vibration kann beispielsweise einen sinusförmigen oder rechteckförmigen Verlauf aufweisen. Bei den Vibrationssignalformen ist darauf zu achten, dass die Form des Signals eingehalten wird und beispielsweise Oberschwingungen vermieden werden. Der Mittelwert der Amplitude sollte dabei Null sein.

Weiter vorzugsweise wird die zeitliche Dauer der Vibration begrenzt, vorzugsweise auf fünf Sekunden, wobei zwischen zwei Vibrationsanforderungen eine Pause liegt, die vorzugsweise mindestens 0,5 Sekunden lang ist.

Die Frequenz, Amplitude und Mittelwert der Vibration sollten unabhängig sein von Handmoment, Lenkradwinkel und der Fahrzeuggeschwindigkeit.

Die Erfindung wird nachfolgend anhand eines bevorzugten Ausführungsbeispieles näher erläutert. Die Fig. zeigen:
- Fig. 1: ein schematisches Blockschaltbild einer Vorrichtung zum aktiven Halten einer Fahrspur eines Kraftfahrzeuges und
- Fig. 2: ein beispielhafter zeitlicher Verlauf eines Zusatzlenkmomentes.

Die Vorrichtung 1 zum aktiven Halten einer Fahrspur eines Kraftfahrzeuges umfasst eine Einrichtung 2 zur Erfassung einer Fahrspur, eine Auswerteeinheit 3 zur Berechnung eines Zusatzlenkmomentes τ_{Z}, um einem unerwünschten Verlassen der Fahrspur entgegenzuwirken, und eine Stelleinrichtung 4 zur Generierung eines Zusatzlenkmomentes τ_{Z}, das beispielsweise mittels eines Getriebes 5 auf ein Handmoment τ_{H} des Kraftfahrzeugführers zu einem Gesamtlenkmoment τ_{G} aufaddiert wird. Die Einrichtung 2 ist beispielsweise als Kamera ausgebildet. Die Auswerteeinheit 3 berechnet aus den Daten der Einrichtung 2 eine Ist-Trajektorie und eine Soll-Trajektorie und hieraus ein Zusatzlenkmoment τ_{Z}, um das Kraftfahrzeug wieder auf die Fahrspur zurückzuführen. Dieses Zusatzlenkmoment τ_{Z} wird in der Auswerteeinheit hinsichtlich Betrag und Gradienten begrenzt, beispielsweise auf 3 Nm bei einer maximalen Steigung von X Nm/s, wobei X vorzugsweise einige Nm/s beträgt. Dieses begrenzte Zusatzlenkmoment τ_{Z} wird dann über das Getriebe 5 zum Handmoment τ_{H} hinzuaddiert.

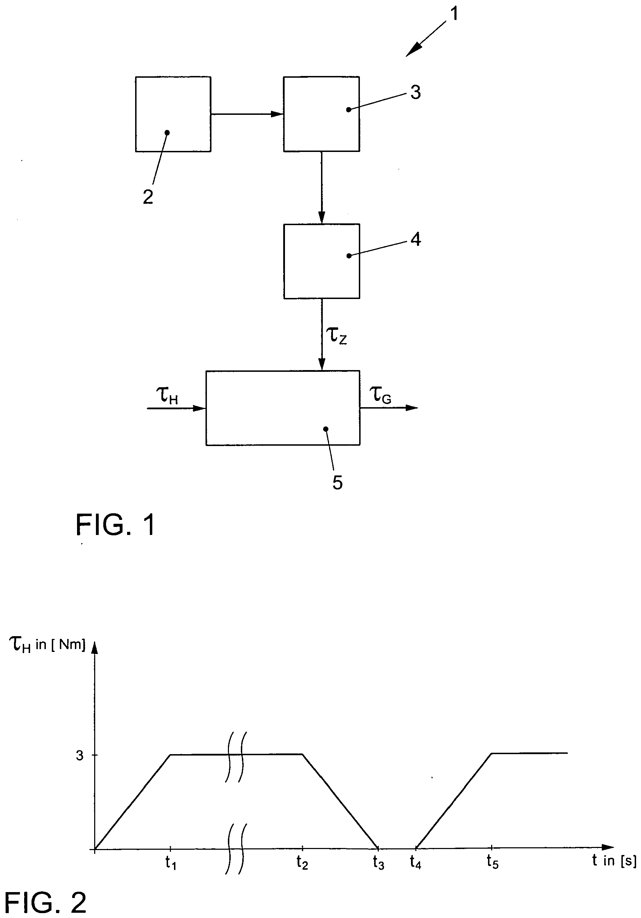

Einen hierzu beispielhaften Verlauf des Zusatzlenkmomentes τ_{Z} ist in Fig. 2 dargestellt. Vom Zeitpunkt 0 steigt das Zusatzlenkmoment τ_{Z} mit einer Steigung von X Nm/s linear an und erreicht zum Zeitpunkt t₁ das maximale Zusatzlenkmoment τ_{Z,max} = 3 Nm. Für einen Zeitraum von t₂ - t₁ = 30 s bleibt das Zusatzlenkmoment τ_{Z} konstant. Um nun einen kontinuierlichen Lenkeingriff durch die Vorrichtung 1 zu verhindern, wird nach dieser maximalen Dauer das Zusatzlenkmoment τ_{Z} mit einem Gradienten von X Nm/s reduziert, so dass nach einer Zeit von t₃ - t₂ das Zusatzlenkmoment τ_{Z} Null ist. Innerhalb einer Pause von t₄ - t₃ = 250 ms werden weitere Anforderungen von Zusatzlenkmomenten τ_{Z} abgelehnt. Erst zum Zeitpunkt t₄ wird dann wieder ein Zusatzlenkmoment τ_{Z} generiert, wobei τ_{Z} dann wieder mit X Nm/s ansteigt, so dass zum Zeitpunkt t₅ wieder das maximale Zusatzlenkmoment τ_{Z} = 3 Nm erreicht wird, wobei t₅ - t₄ entsprechend der Steigung ist.

Entsprechend der Berechnung und Generierung eines Zusatzlenkmomentes τ_{Z} zum aktiven Halten einer Fahrspur kann die Auswerteeinheit 3 ein Vibrationssignal vorgeben, das dann als alternierendes Moment über die Stelleinrichtung 4 auf das Überlagerungsgetriebe 5 addiert wird. Die Stelleinrichtung 4 ist dabei vorzugsweise als elektrischer Servomotor ausgebildet, der weiter vorzugsweise über einen Fahrzeugbus wie CAN mit der Auswerteeinheit 3 verbunden ist. Das Getriebe 5 ist beispielsweise als Zahnstange ausgebildet, die zwei Ritzel aufweist. Dabei wird das eine Ritzel durch das Lenkrad beaufschlagt und das andere Ritzel durch die Stelleinrichtung 4, also vorzugsweise durch den Servomotor. Dabei sei weiter angemerkt, dass das resultierende Zusatzlenkmoment sich aus einer Vielzahl von Einzelkomponenten von Fahrerassistenzfunktionen zusammen kann, beispielsweise die übliche Lenkkraftunterstützung und die Spurhaltung einschließlich
Vibrationssignal.

## Patentansprüche

1. Verfahren zum aktiven Halten einer Fahrspur eines Kraftfahrzeuges, mittels mindestens einer Einrichtung (2) zur Erfassung einer Fahrspur, einer Auswerteeinheit (3) zur Berechnung eines Zusatzlenkmomentes (τ_{Z}), um einem unerwünschten Verlassen der Fahrspur entgegenzuwirken, und einer Stelleinrichtung (4) zur Generierung des Zusatzlenkmomentes (τ_{Z}), wobei die generierten Zusatzlenkmomente (τ_{Z}) von Betrag und Gradienten begrenzt werden,
**dadurch gekennzeichnet, dass**
die Dauer des Zusatzlenkmomentes (τ_{Z}) zeitlich begrenzt wird, wobei zwischen zwei Zusatzlenkmomentphasen eine Pause eingefügt ist.

2. Verfahren nach Anspruch 1, **dadurch gekennzeichnet, dass** sowohl der Gradient beim Anstieg als auch beim Abfall des Zusatzlenkmomentes (τ_{Z}) begrenzt ist.

3. Verfahren nach Anspruch 1 oder 2, **dadurch gekennzeichnet, dass** die Begrenzung des Zusatzlenkmomentes (τ_{Z}) mittels einer Rampenfunktion erfolgt.

4. Verfahren nach einem der Ansprüche 2 oder 3, **dadurch gekennzeichnet, dass** der Gradient beim Anstieg und Abfall des Zusatzlenkmomentes (τ_{Z}) betragsmäßig gleich groß gewählt wird.

5. Verfahren nach einem der vorangegangenen Ansprüche, **dadurch gekennzeichnet, dass** der maximale Betrag und/oder Gradient und/oder die Dauer des Zusatzlenkmomentes (τ_{Z}) und/oder die Pause zwischen zwei Zusatzlenkmomentphasen veränderbar eingestellt werden können.

6. Verfahren nach einem der vorangegangenen Ansprüche, **dadurch gekennzeichnet, dass** zusätzlich eine Lenkradvibration erzeugt wird.

7. Verfahren nach Anspruch 6, **dadurch gekennzeichnet, dass** die zeitliche Dauer der Vibration begrenzt ist.

8. Vorrichtung (1) zum aktiven Halten einer Fahrspur eines Kraftfahrzeuges, umfassend mindestens eine Einrichtung (2) zur Erfassung einer Fahrspur, eine Auswerteeinheit (3) zur Berechnung eines Zusatzlenkmomentes (τ_{Z}), um einem unerwünschten Verlassen der Fahrspur entgegenzuwirken, und eine Stelleinrichtung (4) zur Generierung des Zusatzlenkmomentes (τ_{Z}), wobei die generierten Zusatzlenkmomente (τ_{Z}) vom Betrag und Gradienten begrenzt sind,
**dadurch gekennzeichnet, dass**
die Dauer des Zusatzlenkmomentes (τ_{Z}) zeitlich begrenzt ist, wobei zwischen zwei Zusatzlenkmomentphasen eine Pause eingefügt ist.

9. Vorrichtung nach Anspruch 8, **dadurch gekennzeichnet, dass** sowohl der Gradient beim Anstieg als auch beim Abfall des Zusatzlenkmomentes (τ_{Z}) begrenzt ist.

10. Vorrichtung nach Anspruch 8 oder 9, **dadurch gekennzeichnet, dass** die Begrenzung des Zusatzlenkmomentes (τ_{Z}) mittels einer Rampenfunktion erfolgt.

11. Vorrichtung nach einem der Ansprüche 8 bis 10, **dadurch gekennzeichnet, dass** der Gradient beim Anstieg und Abfall des Zusatzlenkmomentes (τ_{Z}) betragsmäßig gleich groß ist.

12. Vorrichtung nach einem der Ansprüche 8 bis 11, **dadurch gekennzeichnet, dass** der maximale Betrag und/oder Gradient und/oder die Dauer des Zusatzlenkmomentes (τ_{Z}) und/oder die Pause zwischen zwei Zusatzlenkmomentphasen veränderbar einstellbar sind.

13. Vorrichtung nach einem der Ansprüche 8 bis 12, **dadurch gekennzeichnet, dass** zusätzlich eine Lenkradvibration erzeugbar ist.

14. Vorrichtung nach Anspruch 13, **dadurch gekennzeichnet, dass** die zeitliche Dauer der Vibration begrenzt ist.

## Claims

1. Method for actively keeping a motor vehicle in a lane by means of at least one device (2) for detecting a lane, an evaluation unit (3) for calculating an additional steering moment (τ_{Z}) in order to counteract an undesired situation of the said motor vehicle leaving the lane, and an actuating device (4) for generating the additional steering moment (τ_{Z}), wherein the generated additional steering moment (τ_{Z}) is limited in respect of magnitude and gradient,
**characterized in that**
the duration of the additional steering moment (τ_{Z}) is limited with respect to time, wherein an interval is inserted between two additional steering moment phases.

2. Method according to Claim 1, **characterized in that** both the gradient in the event of a rise and also in the event of a fall in the additional steering moment (τ_{Z}) are limited.

3. Method according to Claim 1 or 2, **characterized in that** the process of limiting the additional steering moment (τ_{Z}) is performed by means of a ramp function.

4. Method according to either of Claims 2 and 3, **characterized in that** the gradient in the event of a rise and fall in the additional steering moment (τ_{Z}) are selected to be of equal magnitude.

5. Method according to one of the preceding claims, **characterized in that** the maximum magnitude and/or gradient and/or the duration of the additional steering moment (τ_{Z}) and/or the interval between two additional steering moment phases can be variably adjusted.

6. Method according to one of the preceding claims, **characterized in that** a steering wheel vibration is additionally produced.

7. Method according to Claim 6, **characterized in that** the time duration of the vibration is limited.

8. Apparatus (1) for actively keeping a motor vehicle in a lane, comprising at least one device (2) for detecting a lane, an evaluation unit (3) for calculating an additional steering moment (τ_{Z}) in order to counteract an undesired situation of the said motor vehicle leaving the lane, and an actuating device (4) for generating the additional steering moment (τ_{Z}), wherein the generated additional steering moment (τ_{Z}) is limited in respect of magnitude and gradient,
**characterized in that**
the duration of the additional steering moment (τ_{Z}) is limited with respect to time, wherein an interval is inserted between two additional steering moment phases.

9. Apparatus according to Claim 8, **characterized in that** both the gradient in the event of a rise and also in the event of a fall in the additional steering moment (τZ) are limited.

10. Apparatus according to Claim 8 or 9, **characterized in that** the process of limiting the additional steering moment (τZ) is performed by means of a ramp function.

11. Apparatus according to one of Claims 8 to 10, **characterized in that** the gradient in the event of a rise and fall in the additional steering moment (τZ) are selected to be of equal magnitude.

12. Apparatus according to one of Claims 8 to 11, **characterized in that** the maximum magnitude and/or gradient and/or the duration of the additional steering moment (τZ) and/or the interval between two additional steering moment phases can be variably adjusted.

13. Apparatus according to one of Claims 8 to 12, **characterized in that** a steering wheel vibration is additionally produced.

14. Apparatus according to Claim 13, **characterized in that** the time duration of the vibration is limited.

## Revendications

1. Procédé pour le maintien actif d'une trajectoire d'un véhicule automobile, au moyen d'au moins un dispositif (2) servant à détecter une trajectoire, d'une unité d'évaluation (3) servant à calculer un couple de braquage supplémentaire (τ_{Z}), afin d'agir à l'encontre d'une sortie indésirable de la trajectoire, et d'un dispositif de réglage (4) servant à générer le couple de braquage supplémentaire (τ_{Z}), les couples de braquage supplémentaires (τ_{Z}) générés étant limités en termes de valeur absolue et de gradients,
**caractérisé en ce que**
la durée du couple de braquage supplémentaire (τ_{Z}) est limitée dans le temps, une pause étant introduite entre deux phases de couple de braquage supplémentaire.

2. Procédé selon la revendication 1, **caractérisé en ce qu'**à la fois le gradient lors de l'augmentation et le gradient lors de la diminution du couple de braquage supplémentaire (τ_{Z}) sont limités.

3. Procédé selon la revendication 1 ou 2, **caractérisé en ce que** la limitation du couple de braquage supplémentaire (τ_{Z}) s'effectue au moyen d'une fonction rampe.

4. Procédé selon la revendication 2 ou 3, **caractérisé en ce que** le gradient lors de l'augmentation et le gradient lors de la diminution du couple de braquage supplémentaire (τ_{Z}) sont sélectionnés de manière à présenter la même valeur absolue.

5. Procédé selon l'une quelconque des revendications précédentes, **caractérisé en ce que** la valeur absolue maximale et/ou le gradient et/ou la durée du couple de braquage supplémentaire (τ_{Z}) et/ou la pause entre deux phases de couple de braquage supplémentaire peuvent être réglés de manière variable.

6. Procédé selon l'une quelconque des revendications précédentes, **caractérisé en ce qu'**en outre une vibration de volant de direction est générée.

7. Procédé selon la revendication 6, **caractérisé en ce que** la durée temporelle de la vibration est limitée.

8. Dispositif (1) pour le maintien actif d'une trajectoire d'un véhicule automobile, comportant au moins un dispositif (2) servant à détecter une trajectoire, une unité d'évaluation (3) servant à calculer un couple de braquage supplémentaire (τ_{Z}), afin d'agir à l'encontre d'une sortie indésirable de la trajectoire, et un dispositif de réglage (4) servant à générer le couple de braquage supplémentaire (τ_{Z}), les couples de braquage supplémentaires (τ_{Z}) générés étant limités en termes de valeur absolue et de gradients,
**caractérisé en ce que**
la durée du couple de braquage supplémentaire (τ_{Z}) est limitée dans le temps, une pause étant introduite entre deux phases de couple de braquage supplémentaire.

9. Dispositif selon la revendication 8, **caractérisé en ce qu'**à la fois le gradient lors de l'augmentation et le gradient lors de la diminution du couple de braquage supplémentaire (τ_{Z}) sont limités.

10. Dispositif selon la revendication 8 ou 9, **caractérisé en ce que** la limitation du couple de braquage supplémentaire (τ_{Z}) s'effectue au moyen d'une fonction rampe.

11. Dispositif selon l'une quelconque des revendications 8 à 10, **caractérisé en ce que** le gradient lors de l'augmentation et le gradient lors de la diminution du couple de braquage supplémentaire (τ_{Z}) sont de même valeur absolue.

12. Dispositif selon l'une quelconque des revendications 8 à 11, **caractérisé en ce que** la valeur absolue maximale et/ou le gradient et/ou la durée du couple de braquage supplémentaire (τ_{Z}) et/ou la pause entre deux phases de couple de braquage supplémentaire peuvent être réglés de manière variable.

13. Dispositif selon l'une quelconque des revendications 8 à 12, **caractérisé en ce qu'**en outre une vibration de volant de direction peut être générée.

14. Dispositif selon la revendication 13, **caractérisé en ce que** la durée temporelle de la vibration est limitée.
